# EUROPEAN PATENT APPLICATION

(11) **EP 4 465 728 A1**
(43) Date of publication of application: **20.11.2024**
(21) Application number: 23173388.2
(22) Date of filing: 15.05.2023
(51) Int. Cl.: H04W 72/21, H04W 72/11, H04W 72/23

(54) **UNUSED INDICATION OF TRANSMISSION OCCASIONS**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

Provided are a communication apparatus, a scheduling node, and communication methods for a communication apparatus and a scheduling node. The communication apparatus comprises a transceiver, which, in operation, receives an indication configuration defining one or more configured grant, CG configurations to which an indication of unused CG transmission occasions, TOs, is applicable, and circuitry, which, in operation, generates, based on the indication configuration, the indication of unused CG TOs indicating unused TOs in a number n of TOs of the one or more CG configurations, wherein the transceiver, in operation, transmits the indication of unused CG TOs.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates indication of bits not used by uplink transmissions of a configured grant.

In an embodiment, the techniques disclosed here feature a communication apparatus, comprising a transceiver, which, in operation, receives an indication configuration defining one or more configured grant, CG configurations to which an indication of unused CG transmission occasions, TOs, is applicable, and circuitry, which, in operation, generates, based on the indication configuration, the indication of unused CG TOs indicating unused TOs in a number n of TOs of the one or more CG configurations, wherein the transceiver, in operation, transmits the indication of unused CG TOs.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: is a schematic drawing that shows a functional split between NG-RAN and 5GC to which exemplary embodiments of the present disclosure may be applied;
- **Fig. 3**: is a sequence diagram for RRC connection setup/reconfiguration procedures to which exemplary embodiments of the present disclosure may be applied;
- **Fig. 4**: is a schematic drawing showing usage scenarios of Enhanced mobile broadband (eMBB), Massive Machine Type Communications (mMTC) and Ultra Reliable and Low Latency Communications (URLLC) to which exemplary embodiments of the present disclosure may be applied;
- **Fig. 5**: is a block diagram showing an exemplary 5G system architecture for a non-roaming scenario;
- **Fig. 6**: is a schematic drawing showing an example of a configuration of a plurality of multiple PUSCHs configured grants (multi-PUSCHs CGs);
- **Fig. 7**: is a schematic drawing showing an example of indications of unused transmission occasions (TOs) for a plurality of multi-PUSCHs CGs;
- **Fig. 8**: is a block diagram showing a communication apparatus and a scheduling node;
- **Fig. 9**: is a block diagram illustrating unused TO handling circuitry;
- **Fig. 10**: is a flow chart showing method steps of a communication method for a communication apparatus;
- **Fig. 11**: is a flow chart showing method steps of a communication method for a scheduling node;
- **Fig. 12**: is a schematic drawing showing an example of allocation of indication of unused TOs for a plurality of multi-PUSCHs configured grant configurations;
- **Fig. 13**: is a flow chart showing method steps for determining TOs to be included in an indication of unused TOs;
- **Fig. 14**: is a schematic drawing showing an example of collision of TOs from multiple CG configurations;
- **Fig. 15**: is a schematic drawing showing another example of collision of TOs from multiple CG configurations;
- **Fig. 16**: is a schematic drawing illustrating collision of TOs with uplink resources.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

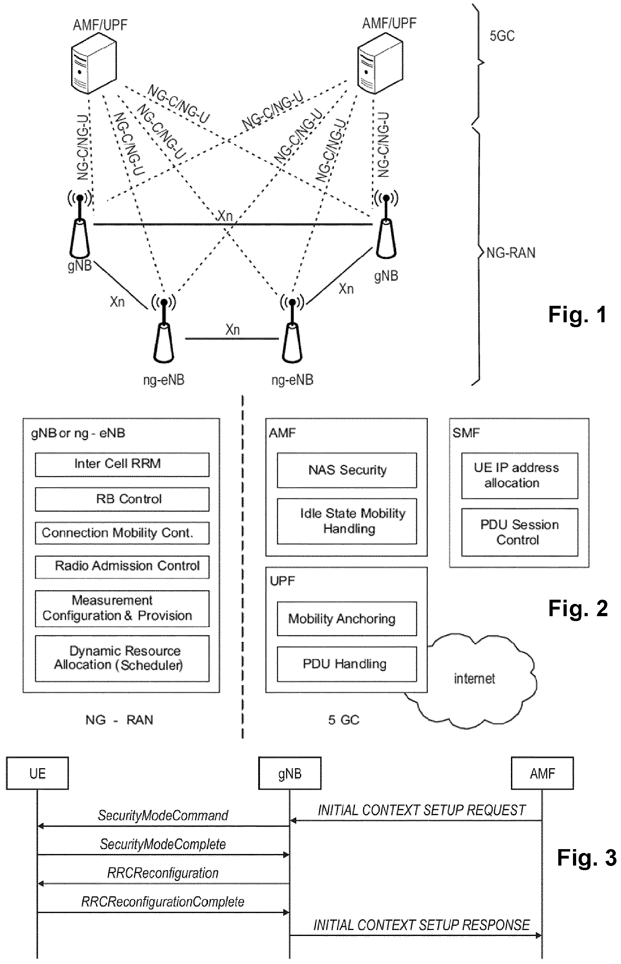

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5G NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter µ (in LTE there is only a 15 kHz subcarrier spacing, corresponding to *µ* = 0 in NR). The types NR numerology are summarized in 3GPP TS 38.211, v 15.7.0.

### 5G NR functional split between NG-RAN and 5GC

**Fig. 2** illustrates functional split between NG-RAN and NGC or 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or CAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

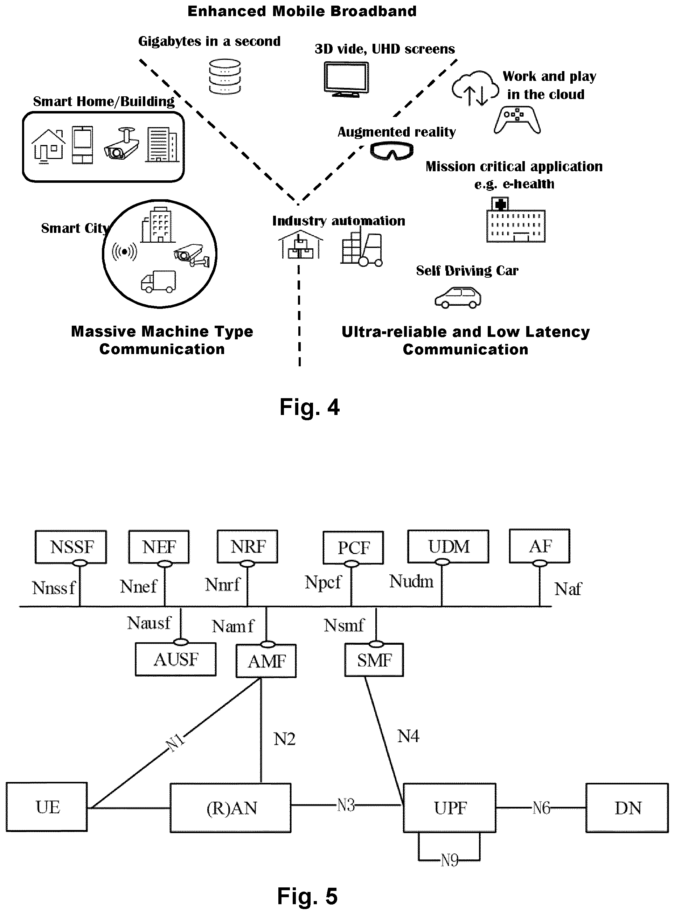

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring.

Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, mini-slots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band.. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

It will be appreciated that, terms such as 3GPP NR system, 5G-NR system, 5G NR system, 5G system, 5G mobile communication system may be used interchangeably herein.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the disclosure and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node,*** e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Extended Reality Applications

As exemplarily shown in **Fig. 4****,** extended reality (XR) applications are considered, including augmented reality (AR), virtual reality (VR), mixed reality (MR), and cloud gaming use cases. To support XR applications while reducing the power consumption and increasing the system capacity, a 3GPPP work item for XR enhancements was approved (cf. 3GPP TSG RAN Meeting #98-e, RP-223502, "XR Enhancements for NR").

Objectives of the work item include specifying enhancements related to power saving, including DRX (discontinuous reception) support of XR frame rates corresponding to non-integer periodicities (through at least semi-static mechanisms e.g. RRC signalling).

Objectives of the work item further include the following enhancements related to capacity.
- Multiple CG PUSCH transmission occasions (TOs) in a period of a single CG PUSCH configuration;
- Dynamic indication of unused CG PUSCH occasion(s) based on UCI by the UE;
- BSR enhancements including at least new BS Table(s);
- Delay reporting of buffered data in uplink;
- Provision of XR traffic assistance information for DL and UL (e.g. periodicity); and
- Discard operation of PDU Sets.

Typically, the XR applications require high data rate in downlink (DL) and uplink (UL) with relatively strict packet delay budget (PDB). In addition, some of XR applications run on devices with a limited source of energy, such as wearable glasses or handheld devices. In this regard, energy efficiency is an important concern. Moreover, XR applications impose a variety of data types, including video streams and pose control traffic.

### Video Stream Traffic Requirements

A video stream may contain video frames with quite large and varying sizes. Regarding packet sizes, for a high quality video stream, the frame size may be around 1M bits after compression for an 8K video. This can lead to having large size packets. Moreover, frame sizes may vary, e.g. due to the structure of the video content or due to some frames being less compressible than other frames. For instance, I-frames (intra-coded pictures), which do not require other frames to decode, may be less compressible than or P-frame/B-frame (predicted or bidirectionally predicted pictures), which require information from the preceding frame (P-frame) or from the preceding and the following frame (B-frames).

Moreover, video stream traffic may typically be characterized as "quasi-periodic", where frames arrive over a time window related to jitter. For instance, the frame packets from a UE/gNB may arrive at the gNB/UE over a time window of [-4, 4] ms or even a larger time window.

Regarding periodicities, an exemplary video stream generates 60, 90, or 120 fps (frames per second), which correspond to a periodicity of 16.667 ms, 11.111 ms, and 8.333 ms, respectively. Accordingly, the periodicity of the time window may be non-integer.

It should be further noted that the delay budget for delivering the XR packets could be tight, for instance, 10 ms for AR/VR or 15 ms for cloud gaming.

### Configured Grant

A UE may be configured for uplink transmission on the PUSCH without having to receive individual resource allocations on the PDCCH for periodic transmission on a specific set of resource blocks. This is referred to as "configured grant" (CG) resource allocation or "grant free" resource allocation. In 3GPP NR, the following two types of CG have been specified within Release 15.

On the one hand, Type 1 configured grants are fully configured by RRC using RRC signaling and do not require PDCCH (layer 1) signaling. A Type 1 CG remains valid until further RRC signaling reconfigures the CG.

On the other hand, Type 2 configured grants are configured using a combination of RRC signaling and PDCCH signaling. A subset of the resource allocation is provided by the RRC signaling, whereas the PDCCH may provide the remaining resource allocation information and also acts as an activation trigger, deactivation trigger, or reactivation trigger for the PUSCH transmissions.

As mentioned above, multiple CG PUSCH transmission occasions (TOs) in a period of a single CG PUSCH configuration (more briefly referred to as "multi-PUSCHs CG") are considered, e.g. for XR applications such as uplink video or pose control traffic.

For multi-PUSCHs CG, issues for possible consideration include MCS (modulation and coding scheme) design and frequency domain resource allocation (cf. RAN1#112bis-e meeting, 3GPP document R1-2304048: Moderator Summary#5 (Final) - XR Specific Capacity Improvements).

In particular, regarding MCS design, it is considered that for CG PUSCHs in a multi-PUSCHs CG configuration, MCS of the CG PUSCHs in the CG configuration are the same between different PUSCH occasions.

Moreover, it is considered that for CG PUSCHs in a multi-PUSCHs CG configuration, frequency domain resource allocations of the CG PUSCHs configuration are the same between different PUSCH occasions.

A further issue for possible consideration is the indication for unused CG PUSCH transmission occasions. In particular, for dynamic indication of unused CG PUSCH transmission occasions based on a UCI (uplink control information), it may be considered that the indicated "unused" CG PUSCH TO(s), if any, by the UCI in a CG PUSCH for a CG configuration can be consecutive or non-consecutive CG PUSCH TO(s) in time domain in one CG period. A further possible issue for consideration is whether and how the unused TO(s) can be associated to multiple CG configuration.

It is further considered that the UTO-UCI provides a bitmap where a bit corresponds to a TO within some time duration or range. The bit indicates whether the TO is "unused". Herein, the term "UTO-UCI" refers to the "UCI that provides information about unused PUSCH transmission occasions".

As mentioned CG PUSCH TOs can be consecutive or non-consecutive in time domain. For instance, a CG PUSCH TO may comprise one or more or all symbols within a slot. In a CG PUSCH configuration, and there may be one or more CG PUSCH TOs within a slot, CG PUSCH TOs in consecutive slots or non-consecutive slots per period of the CG PUSCH configuration.

### Further issues

The inventors have noted that a UE can be configured with more than one multi-PUSCHs CG to carry a data traffic, such as XR video frames in UL. With random frame arrivals over a jitter window, many of PUSCH TOs would not be used. These PUSCH TOs could be released and rescheduled for other traffics if the UE indicates the unused PUSCHs to the gNB. If the indication of unused PUSCH TOs carried over a CG PUSCH is only applicable to the PUSCHs of the same CG, the UE may need to send separate indications of unused PUSCH TOs for different CGs. This may increase the power consumption and reduce the resource utilization.

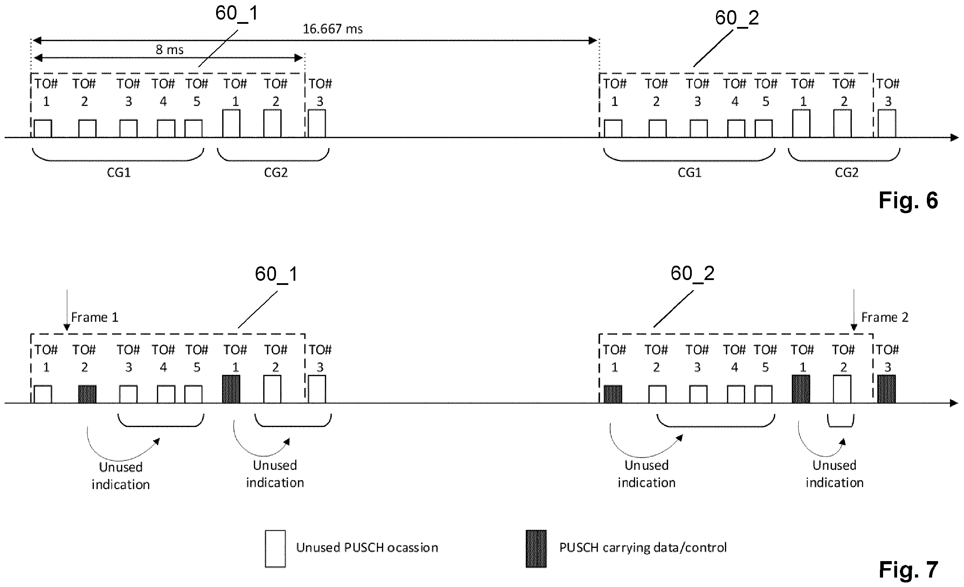

An example is shown in **Fig. 6** where a UE may be configured with two CG configurations, CG1 and CG2, with the periodicity of 16.667 ms, corresponding to the 60 fps video traffic. CG1 may be configured with 5 transmission occasions (TOs) and CG2 may be configured with 3 TOs. A more robust modulation and coding scheme (MCS) is used for PUSCHs of CG2 to ensure that data frame is delivered with high reliability if the frame arrives late (e.g., at or toward the end of the jitter window 60_1, 60_2, which may be an 8 ms as shown in the depicted example).

As is further illustrated in **Fig. 7****,** the first frame may arrive at the beginning of the jitter window 60_1 and may be carried by TO#2 of CG1. In the example shown, the UE sends a CG-UCI over PUSCH TO#2, along with the user data (e.g. a video frame), to indicate that TO#3, TO#4, and TO#5 from the current CG (i.e. CG1) are not used.

The UE then uses PUSCH TO#1 of CG 2 to send an indication of not using TO#2 and TO#3 of the current CG (i.e., CG2).

The second frame arrives at the end of the jitter window 60_2 and it may be carried by TO#3 of CG2. The UE can use TO#1 of CG1 to send an indication of not using TO#2, TO#3, TO#4, and TO#5 of CG1. It can also use TO#1 of CG2 to send an indication of not using TO#2 of CG2.

It can be seen than the UE needs to send several unused indications of unused PUSCH TOs of different CGs.

### Embodiments

In view of the above, the inventors have considered configuring a UE to send an indication of not using a subset of resources that are associated to a specific data service.

The present disclosure in particular provides scheduling devices or scheduling apparatuses (such as scheduling nodes), corresponding methods for scheduling devices, communication devices or communication apparatuses (e.g. adapted/configured to perform the function of a communication terminal in a communication system), corresponding methods and (computer) programs (e.g. stored on a memory) for communication devices (or apparatuses), communications systems comprising such scheduling devices and communication devices, as well as integrated circuits which, in operation, control a processes of scheduling devices/communication devices to perform the respective methods.

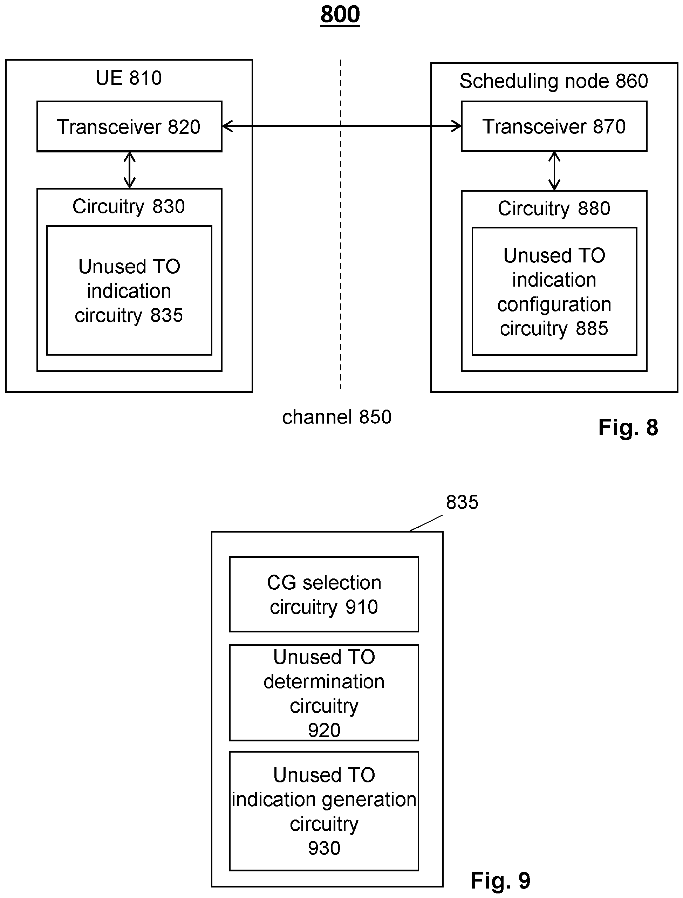

An example of such communication system is illustrated in **Fig. 8****.** The communication system 800 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 8** illustrates a general, simplified and exemplary block diagram of a communication apparatus 810 (here assumed to be a user equipment (UE) or communication terminal) and a scheduling device 860 or scheduling node (here exemplarily assumed to be located in a base station, e.g. in a LTE eNB (alternatively termed ng-eNB) or the gNB in 5G NR) in the communication system 800. However, in general, a scheduling device may also be a terminal in case of a sidelink connection between two terminals. Moreover, in particular with respect to the use cases of URLLC; eMBB, and mMTC, the communication device 810 may also be a sensor device, a wearable device, or a connected vehicle, or a controller of an automated machine in an industrial factory.

As illustrated in **Fig. 8****,** the communication device 810 and the scheduling device 860 (eNB/gNB) may communicate with each other over a (wireless) physical channel 850 respectively using their transceivers 820 (communication terminal side) and 870 (base station side). Together, the scheduling device 860 and the communication apparatus 810 may form the communication system 800. The communication system 800 may further include other entities such as those shown in **Fig. 1** and, e.g. a plurality of UEs connected to the scheduling node or a relay node relaying signals to/from the base station from/to one or more UEs.

As illustrated in **Fig. 8****,** the communication device 810 may comprise a transceiver 820 and circuitry (or processing circuitry) 830, and the scheduling device 860 may comprise a transceiver 870 and a (processing) circuitry 880.

The term **"*transceiver*"** refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the present disclosure, the expressions "UE" and "gNB" before "circuitry" and "transceiver" are used for short to distinguish the transceivers and circuitries of a communication apparatus 810 and a scheduling node 860, without implying any limitation to networks such as 3GPPP NR networks.

According to an exemplary embodiment, a communication apparatus 810 as e.g. illustrated in **Fig. 8** (left-hand side) is provided. The communication apparatus 810 may comprise a transceiver 820 and circuitry 830.

The transceiver 820, in operation, may receive an indication configuration which may be generated and transmitted by the scheduling device 860. The indication configuration may define (e.g. specifies) one or more CG configurations to which an indication of unused configured grant transmission occasions (CG TOs) is applicable.

The circuity 830, in operation, may generate, based on the indication configuration, the indication of unused CG TOs. The indication of unused CG TOs may indicate unused TOs in a number n of TOs of the one or more CG configurations.

The transceiver 820, in operation, may transmit the indication of unused CG TOs.

As will be described further, generating the indication of unused TOs may comprise selecting the CG configurations to which the indication configuration is applicable and determining unused TOs of the selected CG configurations.

The circuitry 830 is exemplarily considered to comprise unused TO indication circuitry 835, which generates the indication of unused TOs. As is further shown in **Fig. 9****,** unused TO indication circuitry 835 may comprise: CG selection circuitry 910 responsible for the selection of CG configurations to be included in the indication of unused CG TOs (for example, selecting 2 CG configurations included in the indication of unused CG TOs); unused TO determination circuitry 920 for determining which TOs of the selected configured grants are used for uplink data traffic and which are unused (for example, determining unused TOs in a number n of TOs of the aforementioned 2 CG configurations); and unused TO indication generation circuitry 930 responsible for generating the indication of unused CG TOs which may indicate unused TOs in the n TOs of the one or more CG configurations, where n is an integer no less than 1 . It is, however, noted that the circuitries 830, 835, and 910 to 930 may implement more functionality than the above-mentioned, and the functionalities mentioned above are in general implemented by circuitry 830 without being limited to the respective circuitries 835 and 910 to 930 described above.

Also provided is a scheduling node or scheduling apparatus 860, which is shown in **Fig. 8** (right-hand side). The scheduling node 860 may comprise a transceiver 870 and circuitry 880.

The circuitry 880, in operation, may determine an indication configuration defining one or more CG configurations to which an indication of unused CG TOs is applicable.

The transceiver 870, in operation, may transmit the indication configuration, and receives the indication of unused CG TOs indicating unused TOs in a number n of TOs of the one or more CG configurations, where n is an integer no less than 1.

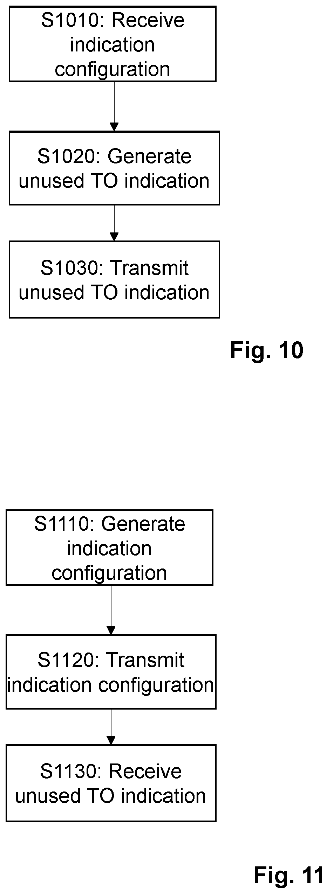

In correspondence with the above described communication apparatus 810, provided is a communication method for a communication apparatus. As illustrated in **Fig. 10****,** steps of the communication method to be performed by the communication apparatus may include receiving S1010, e.g. from a scheduling node, an indication configuration defining one or more configured grant, CG configurations to which an indication of unused CG transmission occasions, TOs, is applicable, generating, S1020, based on the indication configuration, the indication of unused CG TOs indicating unused TOs unused TOs in the a number n of TOs for of the one or more CG configuration, and transmitting, S1030, e.g. to the scheduling node, the indication of unused CG TOs.

Moreover, in correspondence with the above-described scheduling node 860, provided is a communication method for a scheduling node which comprises method steps to be performed by the scheduling node. As shown in **Fig. 11****,** the communication method for the scheduling node may comprise determining S1110 an indication configuration defining one or more CG configurations to which an indication of unused CG TOs is applicable, transmitting S1120 (e.g. to a communication apparatus) the indication configuration, and receiving S1130 (e.g. from the communication apparatus) the indication of unused CG TOs indicating unused TOs in a number n of TOs of the one or more CG configurations.

In the present disclosure, CG TOs may refer to CG PUSCH TOs as mentioned above. A UE may be configured with one or a plurality of CG configurations, where each of the CG configurations defines one or a plurality of ("multi-PUSCHs") CG PUSCH TOs. A used CG TO is a CG TO to which the UE (e.g. using UE circuitry 830) may allocate uplink traffic or user data (e.g. XR video), and an unused CG TO is a CG TO to which no traffic is allocated. As will be described further, the indication configuration may be included in any of the CG configurations, or may be conveyed by separate signalling. Moreover a "CG TO of a CG configuration" means a CG TO configured by the configuration.

For instance, the UE circuitry 830 determines which CG TOs are used and which CG TO are unused based on an estimation regarding when uplink data, e.g. from a video frame subject to jitter, becomes available for allocation to resources.

The indication of unused TOs (or "unused TO indication" "UTO indication" or "unused indication" for short) may be included in uplink channel information such as above-mentioned UTO-UCI.

For instance, the generated indication of unused CG TOs indicates, for each of a number n of CG TOs configured by the one or more CG configurations defined by the indication configuration, whether the CG TO is used or unused. Here, the number "n" refers to a number of CG TOs for which the indication about being used or unused is made in the unused TO indication. In the unused TO indication, each of the n CG TOs may be represented by a bit.

The UE transceiver 820 may transmit the indication of unused CG TOs on a CG TO of the one or more CG configurations. The CG TO on which the indication of unused CG TOs is transmitted precedes the n CG TOs to which the indication refers in a time domain.

For instance, the indication of unused CG TOs is transmitted on a CG TO of one of the CG TO configurations. The CG TO on which the indication of unused CG TOs is transmitted may further include user data. Accordingly, the UE transceiver 820 may transmits, on a CG TO of one CG configuration, the indication of unused CG TOs and user data, which are received by the scheduling node via gNB transceiver 870.

As will be described further, the indication of unused CG TOs may include CG TOs of the same CG configuration as the CG TO where the indication is transmitted, and may further include CG TOs of other CG configurations, in accordance with specification by the transmission configuration.

In some embodiments, the indication configuration may include a list of the one or more CG configurations for the indication of unused CG TOs to which the indication of unused CG TOs is applicable. For instance, a CG configuration contains, as the indication configuration, a list of CG configurations (e.g. the CG configuration itself which includes the list and possibly additional CG configurations), and an unused TO indication generated based on the configuration is applicable to PUSCHs associated to with the CG configurations included in the list.

As mentioned, the CG configurations may be signaled via higher layer signaling such as RRC signaling. One or more CG configurations may include a list of CG configurations for the indication of unused CG TOs to which the indication of unused CG TOs is applicable.

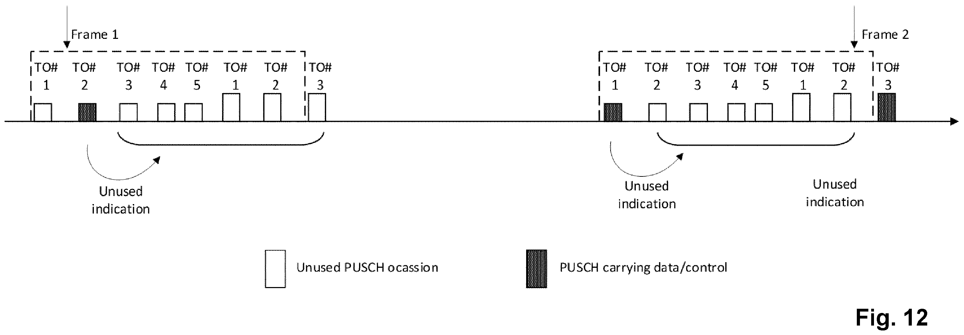

In an example illustrated in **Fig. 12****,** the UE is configured with two CG configurations to carry XR video frames, CG1 and CG2 indicated by different sized rectangles. CG1 is configured to carry unused indication for PUSCH TOs of CG1 and CG2. When a video frame (Frame1) has arrived, the UE carries the data of Frame 1 using PUSCH TO#2 of CG1 along with the unused indication for the following PUSCH TOs of the CG1 and CG2, specifically, TO#3, TO#4, and TO#5 of CG1 as well as TO#2 and TO#3 of CG2 in this example.

For a subsequent video frame, Frame 2, the UE estimates that the frame becomes ready for the transmission later (due to jitter). Accordingly, the UE sends an unused indication, using PUSCH TO#1 of CG1, for the following PUSCH TOs belonging to CG1 and CG2 specifically, TO#2, TO#3, TO#4, and TO#5 of CG1 as well as TO#1 and TO#2 of CG2 in this example. The PUSCH TO#3 of CG2 is later used to carry the frame data. The CG2 can be configured either 1) to carry an unused indication for CG1 and CG2 (e.g. for a period subsequent to the period where Frame 2 is transmitted) or 2) not carry any unused indication.

Compared with the example shown in **Fig. 7****,** it can be seen that the present disclosure may facilitate reducing the number of unused TO indications used, which is helpful e.g. to reduce the power consumption and improve the resource utilization.

By providing a list of CG configurations to which an indication of unused CG TOs should be applicable, the present disclosure facilitates allowing a UE to send fewer indications. For instance, within a period (e.g. period of the CG configuration and /or transmission period for a frame), indications of unused CG TOs need not be transmitted on respective CG TOs of each of the CG configurations indicated by the list.

However, the present disclosure is not limited to the indication configuration being provided as a list of CG configurations, and need not necessarily be included in one of the CG configurations.

In some embodiments, the indication configuration defines a data service with which the one or more CG configurations are associated. The CG configuration may apply to CG configurations associated with a same data service, whereas other indication configurations may apply to CG configurations associated with other or different data services.

For instance, the data service is defined by one or more of a quality of service flow, a radio bearer, a radio link control, RLC, channel, a logical channel, or a range of hybrid automatic repeat request (HARQ) IDs (identifiers).

Accordingly, the indication of unused TOs may be applicable to the resources (e.g. CG TOs of CG configurations) that are associated with one or more of the same QoS flow, the same Radio bearer, the same RLC channel, the same logical channel, or a specified range of HARQ IDs (e.g. HARQ process IDs).

As an example, a UE is configured with two QoS flows, one (QoS1) for video traffic and one (QoS2) for pose/control traffic. In addition, a UE is configured with 3 CGs. The traffic for QoS1 may be carried over PUSCHs of CG1 and CG2, while the traffic for QoS2 may be only carried by PUSCHs of CG3. Accordingly, an unused TO indication carried by a PUSCH of CG1 or CG2 is applicable to both PUSCH TOs of CG1 and CG2, while the unused indication carried by a PUSCH of CG3 is only applicable to PUSCH TO of CG3.

The configuration of the data service to which the unused TO indication is applicable may be configured (e.g. as transmitted by gNB transceiver 860 and received by UE transceiver 820) via higher layer or semi-static signaling such as RRC signaling separately from the CG configurations.

When providing an indication configuration for unused TO indication in association with a data service or the above mentioned quality of service flow, a radio bearer, a radio link control, RLC, channel, a logical channel, or a range of hybrid automatic repeat request, HARQ, IDs, there is no need for separate fields in the CG configuration(s) to define the applicable CG configurations for indication of unused CG TOs.

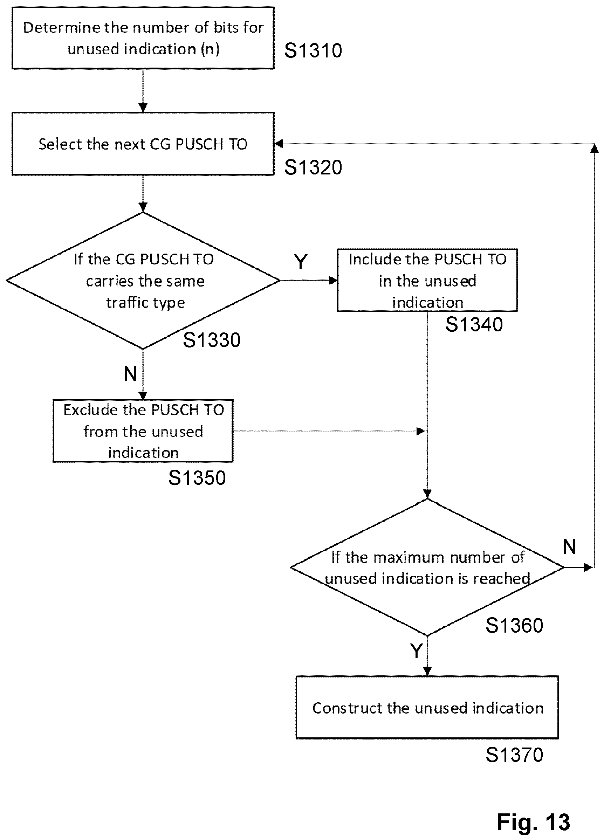

A flow chart showing exemplary steps for determining the PUSCH TOs to be included in the unused TO indication is shown in **Fig. 13****,** which may be executed by UE circuitry 830. In the example shown, the UE includes PUSCH TOs for the same traffic type (e.g. traffic for a same QoS flow).

In step S1310, the UE determines the number n of bits for the indication of unused CG TOs. For instance, the indication is a bit field or bit map having a length of n bits. Starting from step S1320, the method goes through a loop while a number n of TOs included in the indication has not reached the number n. In step S1320, the next CG PUSCH TO (e.g. in a time order corresponding to a slot and/or symbol number or another order to be escribed further) is selected as a candidate for inclusion in the indication of unused TOs. In step S1330, it is tested whether the selected CG PUSCH TO carries the same traffic type as specified by the indication configuration. If yes, the PUSCH TO is included in step S1340 in the indication of unused CG TOs, and it is tested in step S1360 whether the maximum number CG TOs included in the unused TO indication has been reached. If no, the method may proceed with step S1320 or with step S1360. If the number n is reached, the indication of unused TOs is constructed.

The number n of CG TOs comprised by the unused TO indication may be included in the indication configuration, e.g. indicated in addition to the list of CG configurations in a CG configuration or in addition to a data service or traffic type in a separate (e.g. RRC) configuration.

Alternatively, rather than indicating the number n in the configuration, the number n of CG TOs corresponding to a length of the unused TO indication may be determined based on a time criterion, e.g. applicable CG TOs from CG configurations defined by the indication configuration that fall within a certain time duration, such as a period of video frame generation or a period of the CG configuration. Here the time duration may be considered starting from a TO where the unused TO indication is transmitted.

In accordance with exemplary embodiments, the indication of unused CG TOs is a bit field including n bits each mapped to a CG TO among the n CG TOs and indicating whether the CG TO is used or unused.

Such a bit field may be dedicated to PUSCH TOs of different CG configurations separately or jointly. In the following, it is assumed that a total number of n bits are dedicated to the unused TO indication.

For instance, "1" indicates "unused", and "0" indicates "used", or vice versa.

For the separate bit indications, there may be *n*=*n1*+*n2*,.., where *n1* bits are used for unused indication of PUSCHs of CG1 and *n2* bits are used for unused indication of PUSCHs of CG2, etc. The bit field may then include first *n1* bits dedicated to CG TOs of a first CG configuration among the one or more CG configurations and second *n2* bits dedicated to CG TOs of a second CG configuration among the one or more CG configurations.

For a joint bit indication, the whole *n* bits are used for PUSCHs of all applicable CGs.

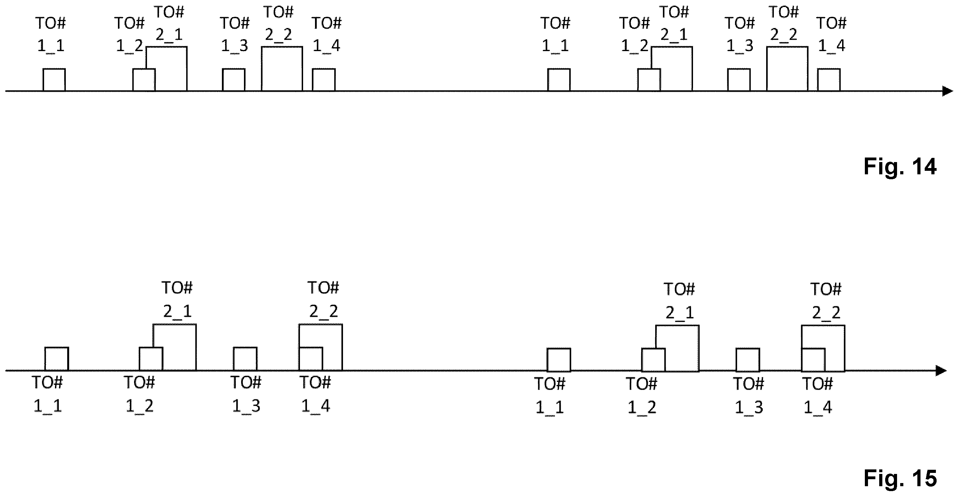

In the following, the separate and joint bit indication will be illustrated using an example of a configuration of a UE with two CG configurations as shown in **Fig. 14****.** CG1 has 4 PUSCH TOs (TO#1_1, TO#1_2, TO#1_3, and TO#1_4) per period and CG2 has 2 PUSCH TOs (TO#2_1 and TO#2_2) per period.

As an example for separate bit indications, a total of 5 bits are dedicated to the unused indication carried by a PUSCH of CG1, as shown in **Table 1.** Among these, 3 bits are dedicated to PUSCHs of CG1 and 2 bits are dedicated to PUSCHs of CG2. The bits are mapped to the following PUSCH TOs subsequent to the TO carrying the indication in the time domain.

**Table 1**

| **PUSCH TO carrying the unused indication** | **Bit 1** | **Bit 2** | **Bit 3** | **Bit 4** | **Bit 5** |
|---|---|---|---|---|---|
| TO#1_1 | TO#1_2 | TO#1_3 | TO#1_4 | TO#2_1 | TO#2_2 |
| TO#1_2 | TO#1_3 | TO#1_4 | TO#1_1 | TO#2_1 | TO#2_2 |
| TO#1_3 | TO#1_4 | TO#1_1 | TO#1_2 | TO#2_2 | TO#2_1 |
| TO#1_4 | TO#1_1 | TO#1_2 | TO#1_3 | TO#2_1 | TO#2_2 |

In addition or alternatively, a total of 4 bits may be dedicated to the unused indication carried by a PUSCH of CG2, 2 bits for PUSCHs of CG1 and 2 bit for PUSCHs of CG2. According to the PUSCH TO, the unused bit indication is mapped to different PUSCH occasions. The bits are mapped to the following PUSCH TOs subsequent to the TO carrying the indication in the time domain.

**Table 2**

| **PUSCH TO carrying the unused indication** | **Bit 1** | **Bit 2** | **Bit 3** | **Bit 4** |
|---|---|---|---|---|
| TO#2_1 | TO#1_3 | TO#1_4 | TO#2_2 | TO#2_1 |
| TO#2_2 | TO#1_4 | TO#1_1 | TO#2_1 | TO#2_2 |

It is noted that in **Tables 1 and 2**, the bits may refer to CG TOs in the same period which also includes the CG TO carrying the unused TO indication, and may further include CG TOs in subsequent period(s). For instance, when the unused CG indication is carried by TO#1_4 of a first period, all bits may refer to CG TOs in a second period subsequent to the first period.

**Table 3** illustrates an example of joint indication where a total of 5 bits are dedicated to the unused indication carried by a PUSCH of CG1 or CG2. The bits are mapped to the PUSCHs followed in time domain.

**Table 3**

| **PUSCH TO carrying the unused indication** | **Bit 1** | **Bit 2** | **Bit 3** | **Bit 4** | **Bit 5** |
|---|---|---|---|---|---|
| TO#1_1 | TO#1_2 | TO#2_1 | TO#1_3 | TO#2_2 | TO#1_4 |
| TO#1_2 | TO#2_1 | TO#1_3 | TO#2_2 | TO#1_4 | TO#1_1 |
| TO#1_3 | TO#2_2 | TO#1_4 | TO#1_1 | TO#1_2 | TO#2_1 |
| TO#1_4 | TO#1_1 | TO#1_2 | TO#2_1 | TO#1_3 | TO#2_2 |
| TO#2_1 | TO#1_3 | TO#2_2 | TO#1_4 | TO#1_1 | TO#1_2 |
| TO#2_2 | TO#1_4 | TO#1_1 | TO#1_2 | TO#2_1 | TO#1_3 |

In the example of joint indication, as also described above for the separate indication, the bits may refer to CG TOs in the same period which also includes the CG TO carrying the unused TO indication, and may further include CG TOs in subsequent period(s).

A difference between separate and joint indication as described above is that with separate indication, each bit always indicates CG TOs of a given CG configuration. For instance, in Table 1, each of Bits 1 to 3 indicate TOs of CG1, irrespectively of the PUSCH TO on which the indication is carried. Accordingly, with separate indication, a bit on a given bit position is dedicated to TOs of a given CG TO configuration On the other hand, in Table 3, a given bit (corresponding to a bit position in the bit field) such as Bit 1 may refer to TOs of both CG configurations CG1 and CG2, depending on which CG TO carries the unused TO indication.

As described above, n may be a length of the bit field corresponding to a number of transmission occasions included in the unused TO indication. As has been further mentioned, n may be a configured by the configuration indication, e.g. as included in a CG configuration. Alternatively, a maximum bit field length may be considered, possibly in combination with a time interval starting from transmission of the unused TO indication. In such case the unused TO indication may include the configured maximum number of bits or less bits.

In **Fig. 14****,** TO#1_2 configured by CG1 and TO#2_1 configured by CG2 are shown as resources collided (e.g. partially or completely overlapping) in time. In the above examples in **Tables 1 to 3,** both collided CG TOs are included in the n CG TOs corresponding to the n bits of the unused TO indication. In the following, it will be considered how a bit can be saved when CG TOs are collided in time. Another example of additional collided resources (TO#2_2 and TO#3_4 with a same start time) is shown in **Fig. 15****.**

In some embodiments, if the CG TOs of one or more CG configurations include two collided TO resources overlapping in the time domain, the n CG TOs for which the indication of unused CG TOs defines whether each CG TO is used or unused include only one of the collided CG TOs.

The UE circuitry 830, in operation, may select said one of the collided CG TOs based on one or a combination of start of CG TOs in time domain, end of CG TOs in time domain, CG configuration ID, HARQ ID, modulation and coding scheme, or number of allocated physical resource blocks as a selection criterion.

For instance, the UE is configured by the gNB with the above selection criterion or criteria. On the scheduling node, the same determination is made by gNB circuitry 880 when evaluating the unused TO indication received by the UE using the same rules.

As described, for the case that two or more resources are collided in time and only one of them can be used for CG PUSCH transmissions, the collision handling is applied before deriving the unused indication. Returning to the example shown in **Fig. 14****,** a UE is configured with two CGs. PUSCH TO#1_2 belonging to CG1 collides with TO#2_1 of CG2. If only one of these collided TOs can be used (e.g., TO#1_2), the UE does not need to dedicate separate bits from the unused bit field indication both TOs. The UE can first determine which of colliding PUSCHs are valid, e.g. by performing the selection based on the above-mentioned criteria, and then decide whether it needs to use the selected TO or release the selected TO. Then it can assign a bit from the unused bit field to the valid PUSCH.

An example is provided in **Table 4** where the UE is configured with the two CG configurations shown in **Fig. 14** and 4 bits are dedicated to unused TO indication. For the collided PUSCH TOs (TO#1_2 and TO#2_1), the TO with the earlier start time will only be used (i.e., TO#1_2). **Table 4** shows the example of bitmaps for unused indication depending on the PUSCH TO.

**Table 4**

| **PUSCH TO carrying the unused indication** | **Bit 1** | **Bit 2** | **Bit 3** | **Bit 4** |
|---|---|---|---|---|
| TO#1_1 | TO#1_2 | TO#1_2 | TO#2_2 | TO#1_4 |
| TO#1_2 | TO#1_3 | TO#2_2 | TO#1_4 | TO#1_1 |
| TO#1_3 | TO#2_2 | TO#1_4 | TO#1_1 | TO#1_2 |
| TO#1_4 | TO#1_1 | TO#1_2 | TO#1_3 | TO#2_2 |
| TO#2_2 | TO#1_4 | TO#1_1 | TO#1_2 | TO#1_3 |

Accordingly, as a benefit the bits of the unused TO indication need to be dedicated only to PUSCH TOs that can be used, facilitating bit saving.

In the above-described case, a resource for a PUSCH TO may be considered invalid e.g. due to collision with a downlink slot or symbol which is configured semi-statically or dynamically as downlink or flexible. The bits for invalid resources may be removed from the indication (to reduce the bits for the unused TO indication e.g. in UCI) or mapped to other valid resources (the bit field size remains the same).

In some embodiments, a CG TO among the CG TOs that is collided with a time resource configured for downlink transmission or unavailable for the uplink due to half-duplex operation is excluded from the n CG TOs for which the indication of unused CG TOs defines whether each CG TO is used or unused.

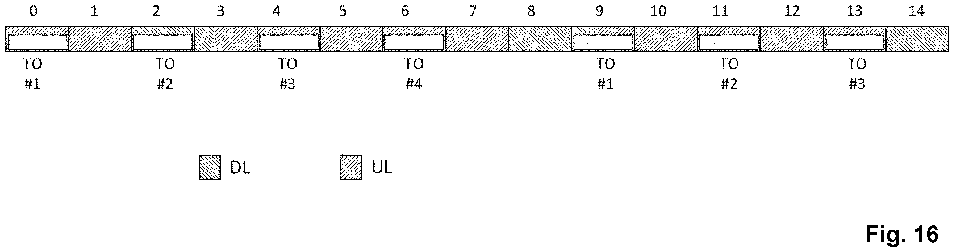

In an example shown in **Fig. 16****,** a UE is configured with a CG with 4 TOs per period. The bit field for the unused TO indication consists of 4 bits, correspond to the 4 PUSCH TOs following the (being subsequent or consecutive to) the PUSCH TO where the unused TO indication is transmitted. However, some of the PUSCH TOs, e.g., TOs over slot 2 and slot 9, collide with DL symbols (e.g. e.g. symbols configured downlink or symbols on slots configured downlink) and cannot be used for the PUSCH transmission. In case the UE sends the unused indication, the collided TOs are not taken into account. For instance, an unused indication carried by a PUSCH TO#1 over slot 1 is applicable to TOs over slots 4, 6, 11, and 13.

The UE may thus save the unused indication bit for a resource that is valid but will not be able to be used for the transmission.

As a note, to avoid misalignment between the UE and gNB regarding the indicated unused PUSCH TOs, invalid PUSCH TOs indicated by the SFI (slot format indicator e.g. dynamically signaled in DCI on a PDCCH) may still be considered for unused determination (e.g. in cases confirmation of successful reception of the SFI cannot be guaranteed or is not acknowledged by the UE).

Furthermore, as mentioned above, a PUSCH TO that is not used due to the half-duplex operation (e.g. where the UE switches between an uplink band and a downlink band) may be excluded from unused TO indication.

In the above description, start of CG TOs in time domain, end of CG TOs in time domain, CG configuration ID, or HARQ ID, modulation and coding scheme, or number of allocated physical resource blocks have been described as criteria for excluding CG TOs from unused TO indication in case of collided resources for PUSCH TOs which may be from different CG configurations among the one or more CG configurations to which an unused TO indication configuration is applicable.

Similar criteria may be used for determining the order in which bits of the unused TO indication are mapped to the n CG TOs.

In some embodiments, the UE circuitry 830 (as well as gNB circuitry 880), in operation, determines an order of mapping the plurality of bits to the n CG TOs based on one or a combination of start of CG TOs in time domain, end of CG TOs in time domain, CG configuration ID, or HARQ ID, modulation and coding scheme (MCS), or number of allocated physical resource blocks.

For instance, in a case where a UE is capable of deciding on using collided resources, the unused bits are mapped to the resources according to the start of the resources in time domain, end of the resource in the time domain, a CG configuration ID, HARQ ID, modulation and coding scheme (MCS), or number of allocated physical resource blocks, or a combination of the above-mentioned criteria, which may be ordered by configured priorities in case of a combination.

Considering the example shown in **Fig. 16****,** a UE is configured with 2 CGs, CG1 consist of 4 PUSCH TOs (TO#1_1, TO#1_2, TO#1_3, and TO#1_4) and CG2 consists of 2 PUSCH TOs (TO#2_1 and TO#2_2). The UE intends to send an unused indication over PUSCH TO#1_1, to indicate which of the following PUSCH TOs will not be used. The bitfield of the unused indication consists of bits that are mapped to the following PUSCH TOs, appear sequentially in time domain. In case the beginning of two PUSCH TOs are the same, the one which ends earlier will be selected to be indicated first. It is assumed that 5 bits are dedicated to the unused TO indication. The bits are then mapped as shown in **Table 5.**

**Table 5**

| **PUSCH TO carrying the unused indication** | **Bit 1** | **Bit 2** | **Bit 3** | **Bit 4** | **Bit 5** |
|---|---|---|---|---|---|
| TO#1_1 | TO#1_2 | TO#2_1 | TO#1_3 | TO#1_4 | TO#2_2 |

It is noted that the ordering of TOs as per unused TO indication bit field is not limited to cases where resources are collided in time.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Aspects

According to a first aspect, provided is a communication apparatus, comprising a transceiver, which, in operation, receives an indication configuration defining one or more configured grant, CG configurations to which an indication of unused CG transmission occasions, TOs, is applicable, and circuitry, which, in operation, generates, based on the indication configuration, the indication of unused CG TOs indicating unused TOs in a number n of TOs of the one or more CG configurations, wherein the transceiver, in operation, transmits the indication of unused CG TOs.

According to a second aspect, which may be provided in combination with the first aspect, the transceiver, in operation, transmits the indication of unused CG TOs and user data on a CG TO of the one or more CG configurations preceding the n CG TOs in a time domain.

According to a third aspect, which may be provided in combination with the first or second aspect, the indication configuration includes a list of the one or more CG configurations for the indication of unused CG TOs to which the indication of unused CG TOs is applicable.

According to a fourth aspect, which may be provided in connection with the first or second aspect, the one or more CG configurations are associated with a same data service, and the indication configuration defines the data service.

According to a fifth aspect, which may be provided in combination with the fourth aspect, the data service is defined by one or more of a quality of service flow, a radio bearer, a radio link control (RLC) channel, a logical channel, or a range of hybrid automatic repeat request (HARQ) IDs.

According to a sixth aspect, which may be provided in combination with any one of the first to fifth aspects, the indication configuration includes the number n of CG TOs.

According to a seventh aspect, which may be provided with any one of the first to sixth aspects, the indication of unused CG TOs is a bit field including n bits each mapped to a CG TO among the n CG TOs and indicating whether the CG TO is used or unused.

According to an eighth aspect, which may be provided in combination with the sixth or seventh aspect, the bit field includes first bits dedicated to CG TOs of a first CG configuration among the one or more CG configurations and second bits dedicated to CG TOs of a second CG configuration among the one or more CG configurations.

According to a ninth aspect, which may be provided in combination with any one of the sixth to eighth aspects, the circuitry, in operation, determines an order of mapping the plurality of bits to the n CG TOs based on one or a combination of start of CG TOs in time domain, end of CG TOs in time domain, CG configuration ID, or HARQ ID, modulation and coding scheme, or number of allocated physical resource blocks.

According to a tenth aspect, which may be provided in combination with any one of the first to eighth aspects, if the CG TOs of one or more CG configurations include two collided TO resources overlapping in in the time domain, the n CG TOs for which the indication of unused CG TOs defines whether each CG TO is used or unused include only one of the collided CG TOs, and the circuitry, in operation, selects said one of the collided CG TOs based on one or a combination of start of CG TOs in time domain, end of CG TOs in time domain, CG configuration ID, HARQ ID, modulation and coding scheme, or number of allocated physical resource blocks.

According to an eleventh aspect, which may be provided in combination with any one of the first to tenth aspects, a CG TO among the CG TOs that is collided with a time resource configured for downlink transmission or unavailable for the uplink due to half-duplex operation is excluded from the n CG TOs for which the indication of unused CG TOs defines whether each CG TO is used or unused.

According to a twelfth aspect, provided is a scheduling node, comprising circuitry, which, in operation, determines an indication configuration defining one or more CG configurations to which an indication of unused CG TOs is applicable, and a transceiver, which, in operation, transmits the indication configuration, and receives the indication of unused CG TOs indicating unused TOs in a number n of TOs of the one or more CG configurations.

According to a thirteenth aspect, which may be provided in combination with the twelfth aspect, the transceiver, in operation, receives, on said CG TO, the indication of unused TOs and user data on a CG TO of the one or more CG configurations preceding the n CG TOs in a time domain.

According to a fourteenth aspect, which may be provided in combination with the twelfth or thirteenth aspect, the indication configuration includes a list of the one or more CG configurations for the indication of unused CG TOs to which the indication of unused CG TOs is applicable.

According to a fifteenth aspect, which may be provided in connection with the twelfth or thirteenth aspect, the one or more CG configurations are associated with a same data service, and the indication configuration defines the data service.

According to a sixteenth aspect, which may be provided in combination with the fifteenth aspect, the data service is defined by one or more of a quality of service flow, a radio bearer, a radio link control (RLC) channel, a logical channel, or a range of hybrid automatic repeat request (HARQ) IDs.

According to a seventeenth aspect, which may be provided in combination with any one of the twelfth to sixteenth aspects, the indication configuration includes the number n of CG TOs.

According to an eighteenth aspect, which may be provided with any one of the twelfth to sixteenth aspects, the indication of unused CG TOs is a bit field including n bits each mapped to a CG TO among the n CG TOs and indicating whether the CG TO is used or unused.

According to a nineteenth aspect, which may be provided in combination with the seventeenth or eighteenth aspect, the bit field includes first bits dedicated to CG TOs of a first CG configuration among the one or more CG configurations and second bits dedicated to CG TOs of a second CG configuration among the one or more CG configurations.

According to a twentieth aspect, which may be provided in combination with any one of the seventeenth to nineteenth aspects, the circuitry, in operation, determines an order of mapping the plurality of bits to the n CG TOs based on one or a combination of start of CG TOs in time domain, end of CG TOs in time domain, CG configuration ID, or HARQ ID, modulation and coding scheme, or number of allocated physical resource blocks.

According to a twenty-first aspect, which may be provided in combination with any one of the twelfth to nineteenth aspects, if the CG TOs of one or more CG configurations include two collided TO resources overlapping in in the time domain, the n CG TOs for which the indication of unused CG TOs defines whether each CG TO is used or unused include only one of the collided CG TOs, and the circuitry, in operation, selects said one of the collided CG TOs based on one or a combination of start of CG TOs in time domain, end of CG TOs in time domain, CG configuration ID, HARQ ID, modulation and coding scheme, or number of allocated physical resource blocks.

According to an twenty-second aspect, which may be provided in combination with any one of the first to tenth aspects, a CG TO among the CG TOs that is collided with a time resource configured for downlink transmission or unavailable for the uplink due to half-duplex operation is excluded from the n CG TOs for which the indication of unused CG TOs defines whether each CG TO is used or unused.

According to a twenty-third aspect, provided is a communication method for a communication apparatus, comprising the steps of receiving an indication configuration defining one or more configured grant, CG configurations to which an indication of unused CG transmission occasions, TOs, is applicable, generating, based on the indication configuration, the indication of unused CG TOs indicating unused TOs unused TOs in the a number n of TOs for of the one or more CG configurations, and transmitting the indication of unused CG TOs.

The twenty-third aspect may be combined with aspects corresponding to the second to eleventh aspects of the corresponding communication apparatus.

According to a twenty-fourth aspect, provided is a communication method for a scheduling node, comprising the steps of determining an indication configuration defining one or more CG configurations to which an indication of unused CG TOs is applicable, transmitting the indication configuration, and receiving the indication of unused CG TOs indicating unused TOs in a number n of TOs of the one or more CG configurations.

The twenty-fourth aspect may be combined with aspects corresponding to the thirteenth to twenty-second aspects of the corresponding scheduling node.

According to a twenty-fifth aspect, provided is an integrated circuit which, in operation, causes a communication apparatus to carry out the steps of the communication method according to the twenty-third aspect.

According to a twenty-sixth aspect, provided is an integrated circuit which, in operation, causes a scheduling node to carry out the steps of the communication method according to the twenty-fourth aspect.

According to a twenty-seventh aspect, provided is a program stored on a (non-transitory) storage medium and including code instructions, which, when executed on one or more processors of a communication apparatus, cause the one or more processors to execute the steps the twenty-third aspect.

According to a twenty-eighth aspect, provided is a program stored on a (non-transitory) storage medium and including code instructions, which, when executed on one or more processors of a scheduling, cause the one or more processors to execute the steps the twenty-fourth aspect.

## Claims

1. A communication apparatus, comprising:
a transceiver, which, in operation, receives an indication configuration defining one or more configured grant, CG configurations to which an indication of unused CG transmission occasions, TOs, is applicable; and
circuitry, which, in operation, generates, based on the indication configuration, the indication of unused CG TOs indicating unused TOs in a number n of TOs of the one or more CG configurations;
wherein the transceiver, in operation, transmits the indication of unused CG TOs.

2. The communication apparatus according to claim 1, wherein the transceiver, in operation, transmits the indication of unused CG TOs and user data on a CG TO of the one or more CG configurations preceding the n CG TOs in a time domain.

3. The communication apparatus according to claim 1 or 2, wherein the indication configuration includes a list of the one or more CG configurations for the indication of unused CG TOs to which the indication of unused CG TOs is applicable.

4. The communication apparatus according to claim 1 or 2, wherein the one or more CG configurations are associated with a same data service, and the indication configuration defines the data service.

5. The communication apparatus according to claim 4, wherein the data service is defined by one or more of a quality of service flow, a radio bearer, a radio link control, RLC, channel, a logical channel, or a range of hybrid automatic repeat request, HARQ, IDs.

6. The communication apparatus according to any one of claims 1 to 5, wherein the indication configuration includes the number n of CG TOs.

7. The communication apparatus according to any one of claims 1 to 6, wherein the indication of unused CG TOs is a bit field including n bits each mapped to a CG TO among the n CG TOs and indicating whether the CG TO is used or unused.

8. The communication apparatus according to claim 6 or 7, wherein the bit field includes first bits dedicated to CG TOs of a first CG configuration among the one or more CG configurations and second bits dedicated to CG TOs of a second CG configuration among the one or more CG configurations.

9. The communication apparatus according to any one of claims 6 to 8, wherein the circuitry, in operation, determines an order of mapping the plurality of bits to the n CG TOs based on one or a combination of start of CG TOs in time domain, end of CG TOs in time domain, CG configuration ID, or HARQ ID, modulation and coding scheme, or number of allocated physical resource blocks.

10. The communication apparatus according to any one of claims 1 to 8, wherein, if the CG TOs of one or more CG configurations include two collided TO resources overlapping in in the time domain, the n CG TOs for which the indication of unused CG TOs defines whether each CG TO is used or unused include only one of the collided CG TOs, and the circuitry, in operation, selects said one of the collided CG TOs based on one or a combination of start of CG TOs in time domain, end of CG TOs in time domain, CG configuration ID, HARQ ID, modulation and coding scheme, or number of allocated physical resource blocks.

11. The communication apparatus according to any one of claims 1 to 10, wherein a CG TO among the CG TOs that is collided with a time resource configured for downlink transmission or unavailable for the uplink due to half-duplex operation is excluded from the n CG TOs for which the indication of unused CG TOs defines whether each CG TO is used or unused.

12. A scheduling node, comprising:
circuitry, which, in operation, determines an indication configuration defining one or more CG configurations to which an indication of unused CG TOs is applicable; and
a transceiver, which, in operation, transmits the indication configuration, and receives the indication of unused CG TOs indicating unused TOs in a number n of TOs of the one or more CG configurations.

13. The scheduling node according to claim 12, wherein the transceiver, in operation, receives, on said CG TO, the indication of unused TOs and user data on a CG TO of the one or more CG configurations preceding the n CG TOs in a time domain.

14. A communication method for a communication apparatus, comprising the steps of:
receiving an indication configuration defining one or more configured grant, CG configurations to which an indication of unused CG transmission occasions, TOs, is applicable;
generating, based on the indication configuration, the indication of unused CG TOs indicating unused TOs unused TOs in a number n of TOs for of the one or more CG configurations; and
transmitting the indication of unused CG TOs.

15. A communication method for a scheduling node, comprising the steps of:
determining an indication configuration defining one or more CG configurations to which an indication of unused CG TOs is applicable;
transmitting the indication configuration; and
receiving the indication of unused CG TOs indicating unused TOs in a number n of TOs of the one or more CG configurations.
